# EUROPEAN PATENT APPLICATION

(11) **EP 1 662 595 A1**
(43) Date of publication of application: **31.05.2006**
(21) Application number: 04772289.7
(22) Date of filing: 20.08.2004
(51) Int. Cl.: H01M 8/02, H01M 8/10

(54) **SOLID POLYMER FUEL CELL**

(30) Priority: 22.08.2003 JP 2003299067
(71) Applicant: KABUSHIKI KAISHA TOYOTA CHUO KENKYUSHO, Aichi-gun, Aichi-ken, 480-1192 (JP); Toyota Jidosha Kabushiki Kaisha, Toyota-shi, Aichi 471-8571 (JP)
(72) Inventor: MIURA, Fusayoshi, c/o K. K. TOYOTA CHUO KENKYUSHO, Aichi-gun, Aichi 4801192 (JP); TAKESHITA, T., c/o K. K. TOYOTA CHUO KENKYUSHO, Aichi-gun, Aichi 4801192 (JP); HATANAKA, Tatsuya, c/o K. K. TOYOTA CHUO KENKYUSHO, Aichi-gun, Aichi 4801192 (JP); MORIMOTO, Yu, c/o K. K. TOYOTA CHUO KENKYUSHO, Aichi-gun, Aichi 4801192 (JP); KOBAYASHI, Masafumi, c/o TOYOTA JIDOSHA K. K., Toyota-shi, Aichi 4718571 (JP); KATO, Manabu, c/o TOYOTA JIDOSHA KABUSHIKI KAISHA, Toyota-shi, Aichi 4718571 (JP); TAKEUCHI, Norimitsu, c/o TOYOTA JIDOSHA K. K., Toyota-shi, Aichi 4718571 (JP)
(74) Representative: TBK-Patent
(86) International application number: PCT/JP2004/012333
(87) International publication number: WO 2005/020357

(57) **Abstract**

To improve oxidation resistance of an electrolyte membrane and durability thereof by a low-cost method, thereby improving durability of a polymer electrolyte fuel cell. According to the present invention, in the polymer electrolyte fuel cell having a membrane-electrode assembly including a polymer electrolyte membrane and electrodes bonded to both sides of the polymer electrolyte membrane, phosphate containing at least one metallic element selected from a rare earth element, Ti, Fe, Al and Bi is fixed to at least one of the polymer electrolyte membrane and the electrodes.

## Description

### TECHNICAL FIELD

The present invention relates to a polymer electrolyte fuel cell, more particularly to a polymer electrolyte fuel cell suitable for an onboard power source, a fixed type compact generator, a cogeneration system, and the like.

### BACKGROUND ART

A polymer electrolyte is a polymeric material having an electrolyte group such as a sulfonic acid group in a polymer chain. Since the polymer electrolyte has properties of firmly bonding to specific ions and selectively allowing cations and anions to permeate, it is formed into granules, fibers or membranes and utilized for various kinds of applications such as electrodialysis, diffusion dialysis and cell diaphragms.

For example, in various kinds of electrochemical devices such as a polymer electrolyte fuel cell and a water electrolyzer, the polymer electrolyte is formed into a membrane and used in a state of a membrane-electrode assembly (MEA), both sides of which are bonded with electrodes. Further, in the polymer electrolyte fuel cell, the electrode generally has a two-layer structure consisting of a diffusion layer and a catalyst layer. The diffusion layer, for which carbon fibers, carbon papers or the like are used, is for supplying the catalyst layer with a reactant gas and electrons. In addition, the catalyst layer is a part to be a reaction field of an electrode reaction and generally consists of a complex of carbon supporting a catalyst such as platinum and a polymer electrolyte.

As the polymer electrolyte used in such applications, various materials are conventionally known. For example, for the electrolyte membrane and the intra-catalyst layer electrolyte used in the electrochemical devices operating under extreme conditions, it is general to use a wholly fluorinated electrolyte (an electrolyte not including a C-H bond in a polymer chain, e.g. Nafion (a registered trademark, manufactured by E. I. Du Pont de Nemours and Company), Aciplex (a registered trademark, manufactured by Asahi Kasei Corporation), and Flemion (a registered trademark, manufactured by Asahi Glass Co., Ltd.)) which is excellent in oxidation resistance.

On the other hand, while the wholly fluorinated electrolyte is excellent in oxidation resistance, it exceedingly costs in general. Therefore, in order to achieve cost reductions in the various kinds of electrochemical devices using the polymer electrolyte, a study is also conducted on the use of a hydrocarbon-based electrolyte (an electrolyte including a C-H bond and not including a C-F bond in a polymer chain) or a partially fluorinated electrolyte (an electrolyte including both of a C-H bond and a C-F bond in a polymer chain).

However, in an operating environment of the polymer electrolyte fuel cell, peroxide is produced as a side reaction of the electrode reaction. Further, the produced peroxide changes into peroxide radical while diffusing in the membrane. The conventional hydrocarbon-based electrolyte or partially fluorinated electrolyte still presents a problem that it is apt to be degraded by such peroxide radical and has low oxidation resistance. This is because a hydrocarbon skelton constituting these electrolytes is susceptible to an oxidative reaction by peroxide radical.

Consequently, in order to cope with these problems, various solutions are conventionally proposed. For example, Japanese Patent Application Unexamined Publication No. 2001-118591 discloses a highly durable polymer electrolyte in which, in order to suppress decomposition of a hydrocarbon-based electrolyte by peroxide radical, transition metal oxide such as manganese oxide, ruthenium oxide, cobalt oxide, nickel oxide, chromium oxide, iridium oxide and lead oxide, which has the effect of subjectingperoxide (e. g. hydrogenperoxide) to catalytic cracking, is dispersed in the hydrocarbon-based electrolyte.

Further, Japanese Patent Application Unexamined Publication No. 2000-106203 discloses a polymer electrolyte membrane in which, in order to suppress degradation of a sulfonic acid-based resin consisting of a copolymer of a fluorocarbon-based vinyl monomer and ahydrocarbon-based vinylmonomerduetohydrogen peroxide, a catalyst having the effect of decomposing hydrogen peroxide, which is at least one of an oxide catalyst including MnO₂, RuO₂ and ZnO, a macrocyclic metal complex catalyst including iron phthalocyanine and copper phthalocyanine, and a transition metal alloy catalyst including Cu-Ni, is added to a membrane of the sulfonic acid-based resin.

Still further, Japanese Patent Application Unexamined Publication No. 2001-307752 discloses a complex proton conducting membrane which includes, in order to improve durability of an aromatic polymer compound having a sulfonic acid group, a complex of a polymer compound, siliconoxide, and an inorganic compound whose principal ingredient is a phosphate derivative, the complex proton conducting membrane obtained by adding tetraethoxysilane and phosphoric acid to a solution containing the aromatic polymer compound having the sulfonic acid group and by evaporating its solvent.

Still further, Japanese Patent Application Unexamined Publication No. 2001-213987 discloses a high-temperature proton-conducting electrolyte membrane in which, in order to maintain high proton conductivity under high temperature conditions of 100°C or more, polyvinylpyridine is graft-polymerized with an ethylene-tetrafluoroethylene copolymer membrane, to which phosphoric acid is further doped.

Still further, while giving no consideration on oxidation resistance, Japanese Patent Application Unexamined Publication No. Hei6-103983 discloses a polymer electrolyte fuel cell in which a perfluorocarbon sulfonic acid membrane to which a phosphoric acid-zirconium compound (Zr(O₃PCH₂SO₃H)₂) or phosphoric acid (H₃PO₄) is added is employed as an electrolyte membrane in order to enhance water retentivity of the electrolyte membrane and enable long-term operation at high temperatures of 80°C or more.

Noble metals such as Pt, Ru, Ir and Rh and oxides thereof have the effect of decomposing peroxide. Therefore, the addition of a powder thereof to the hydrocarbon-based electrolyte or partially fluorinated electrolyte suppresses generation of peroxide radical to improve oxidation resistance. However, the noble metals mentioned above are poor in resources and high in price; therefore, the method of adding the noble metals or oxides thereof is impractical.

On the other hand, a certain kind of transition metal oxide such as manganese dioxide has the effect of decomposing peroxide, and moreover, it is lower in price than the noble metals and oxides thereof. However, the conventionally known transition metal oxide does not necessarily have adequate decomposition activity against peroxide. In particular, if the conventionally known one is used in an application such as the polymer electrolyte fuel cell which requires high oxidation resistance, sufficient durability cannot be achieved.

Further, the inorganic compound obtained by making a reaction betweentetraethoxysilaneand phosphoric acid, which is disclosed in Japanese Patent Application Unexamined Publication No. 2001-307752, is synthesized at comparatively low temperatures, so that its structure tends to be unstable. Accordingly, in an environment in contact with high-temperature or low-pH water, the inorganic compound is gradually eluted to decrease oxidation resistance over time.

Still further, while Japanese Patent Application Unexamined Publications Nos. 2001-213987 and Hei6-103983 pay attention only to water retentivity and high-temperature proton conductivity and do not disclose the effect of decomposing peroxide, the present applicants have found that phosphoric acid or a certain kind of phosphoric acid-zirconium compound has the effect of decomposing peroxide. However, in the environment in contact with high-temperature or low-pH water, phosphoric acid or the certain kind of phosphoric acid-zirconium compound is also gradually eluted to decrease oxidation resistance over time.

Still further, it has been conventionally considered that the wholly fluorinated electrolyte is of high resistance to peroxide radical and is not deteriorated even if it is used for a long time in an environment where peroxide radical coexists. However, the present inventors have found that even the wholly fluorinated electrolyte is deteriorated over time if it is used for a long time under the operating conditions of a fuel cell. Therefore, it is desired that durability of the electrolyte is further improved in respect of applications which require a high level of oxidation resistance.

An obj ect of the invention is to overcome the problems described above and to improve oxidation resistance of the electrolyte membrane and durability thereof by a low-cost method, thereby improving durability of the polymer electrolyte fuel cell. Another object of the invention is to improve oxidation resistance of the wholly fluorinated electrolyte and durability thereof by a low-cost method, thereby improving durability of the polymer electrolyte fuel cell using the wholly fluorinated electrolyte.

### DISCLOSURE OF THE INVENTION

To achieve the objects and in accordance with the purpose of the present invention, in a polymer electrolyte fuel cell having a membrane-electrode assembly including a polymer electrolyte membrane and electrodes bonded to both sides of the polymer electrolyte membrane, phosphate containing at least one metallic element selected from a rare earth element, Ti, Fe, Al and Bi is fixed to one or more of the polymer electrolyte membrane and the electrodes.

In the polymer electrolyte fuel cell consistent with the present invention, since phosphate containing the predetermined metallic element is fixed to one or more of the polymer electrolyte membrane and the electrodes, radical reaction of peroxide and radical decomposition of an organic polymer caused thereby are suppressed. In addition, phosphate containing the predetermined metallic element is relatively low in solubility in high-temperature and low-pH water; therefore, excellent oxidation resistance can be maintained for an extended period of time. Further, if such phosphate is added to a wholly fluorinated electrolyte, degradation thereof by peroxide radical is suppressed. Therefore, if this is applied to the polymer electrolyte fuel cell, durability thereof is further improved.

### BRIEF DESCRIPTION OF THE DRAWINGS

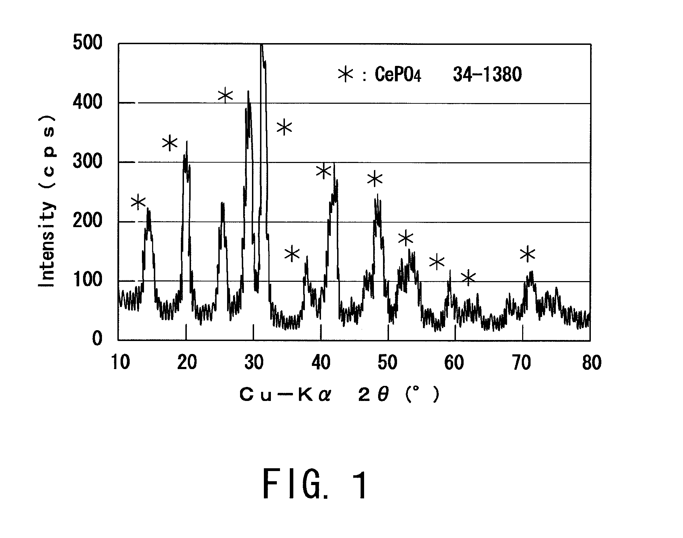

Fig. 1 is a graph of an X-ray diffraction profile of a white powder which is obtained by adding an H₃PO₄ aqueous solution to a Ce(NO₃)₃ aqueous solution.

### BEST MODE FOR CARRYING OUT THE INVENTION

A detailed description of one preferred embodiment of a polymer electrolyte fuel cell embodied by the present invention is provided below. The polymer electrolyte fuel cell consistent with the present invention is providedwithamembrane-electrode assembly (MEA) in which electrodes are bonded to both sides of a polymer electrolyte membrane. In addition, the polymer electrolyte fuel cell is generally constituted of a stack of a plurality of MEAs which are sandwiched between separators having gas passages.

In the present invention, a material for the polymer electrolyte membrane is not specifically limited, and various materials can be employed. In other words, the material for the polymer electrolyte membrane may be a hydrocarbon-based electrolyte including a C-H bond and not including a C-F bond in a polymer chain, or a fluorine-based electrolyte including a C-F bond in a polymer chain. In addition, the fluorine-based electrolyte may be a partially fluorinated electrolyte including both of a C-H bond and a C-F bond in a polymer chain, or a wholly fluorinated electrolyte including a C-F bond and not including a C-H bond in a polymer chain.

Incidentally, the fluorine-based electrolyte may have a fluorocarbon structure (-CF₂-, -CFCl-), a chlorocarbonstructure (-CCl₂-), or other structures (e.g. -O-, -S-, -C(=O)-, and -N(R)-, where "R" is an alkyl group). In addition, a molecular structure of a polymer constituting the polymer electrolyte membrane is not specifically limited, and may have either of a linear structure and a branch structure or may have an annular structure.

Further, the kind of electrolyte group provided to the polymer electrolyte is neither specifically limited. Mentioned as suitable examples for the electrolyte group are a sulfonic acid group, a carboxylic acid group, a phosphonic acid group, a sulfonimide group, and the like. The polymer electrolyte may contain only one of these electrolyte groups, ormore than one of them. In addition, these electrolyte groups may be directly bonded to a straight chain polymer compound, or may be bonded to either a principal chain or a side chain of a branched polymer compound.

Specifically mentioned as suitable examples for the hydrocarbon-based electrolyte are polyamide, polyacetal, polyethylene, polypropylene, acrylic resin, polyester, polysulfone, polyether and the like where an electrolyte group such as a sulfonic acid group is introduced in any part of a polymer chain, and their derivatives (an aliphatic hydrocarbon-based electrolyte), polystyrene, polyamide having an aromatic ring, polyamide imide, polyimide, polyester, polysulfone, polyether imide, polyether sulfone, polycarbonate and the like where an electrolyte group such as a sulfonic acid group is introduced in any part of a polymer chain, and their derivatives (a partially aromatic hydrocarbon-based electrolyte), polyether ether ketone, polyether ketone, polysulfone, polyether sulfone, polyimide, polyether imide, polyphenylene, polyphenylene ether, polycarbonate, polyamide, polyamide imide, polyester, polyphenylene sulfide and the like where an electrolyte group such as a sulfonic acid group is introduced in any part of a polymer chain, and their derivatives (a wholly aromatic hydrocarbon-based electrolyte), and the like.

In addition, specifically mentioned as suitable examples for the partially fluorinated electrolyte are a polystyrene-grafted-ethylene tetrafluoroethylene copolymer (hereinafter referred to as "PS-g-ETFE"), polytetrafluoroethylene-grafted-polystyrene and the like where an electrolyte group such as a sulfonic acid group is introduced in any part of a polymer chain, and their derivatives.

In addition, specifically mentioned as suitable examples for the wholly fluorinated electrolyte are Nafion (a registered trademark) manufactured by E. I. Du Pont de Nemours and Company, Aciplex (a registered trademark) manufactured by Asahi Kasei Corporation, Flemion (a registered trademark) manufactured by Asahi Glass Co., Ltd. and the like, and their derivatives.

Further, in the present invention, the polymer electrolyte membrane constituting the MEAmay be a complex obtained by impregnating various polymer electrolytes or an electrolyte solution of phosphoric acid and the like into porous bodies of a reinforcing material composed of a porous polymer compound.

Among these electrolytes, the fluorine-based electrolyte, especially the wholly fluorinated electrolyte, which has the C-F bond in the polymer chain, is excellent in oxidation resistance. Therefore, if the present invention is applied thereto, a polymer electrolyte fuel cell excellent in oxidation resistance and durability can be obtained.

The electrodes constituting the MEA generally have a two-layer structure consisting of a catalyst layer and a diffusion layer, and are sometimes constituted of the catalyst layers only. In the case of the electrodes having the two-layer structure consisting of the catalyst layer and the diffusion layer, the electrodes are bonded to the polymer electrolyte membrane via the catalyst layers.

The catalyst layer is a part to be a reaction field of an electrode reaction, and is provided with a catalyst or a catalyst-supporting carrier and an intra-catalyst layer electrolyte for coating thereof. In general, for the catalyst, optimum one is put to use in accordance with the intended use, usage conditions and the like of the MEA. In the case of the polymer electrolyte fuel cell, platinum, platinum alloy, palladium, ruthenium, rhodium or the like, or their alloys is employed as the catalyst. A catalyst content of the catalyst layer is optimally selected in accordance with the intended use, usage conditions and the like of the MEA.

The catalyst-supporting carrier is for supporting a particulate catalyst as well as performing exchange of electrons in the catalyst layer. For the catalyst-supporting carrier, graphite, acetylene black, oil furnace black, activated carbon, fullerene, carbon nanofon, a carbon nano tube, VGCF (vapor grown carbon fiber) and the like are generally used. An amount of catalyst supported on a surface of the catalyst-supporting carrier is optimally selected in accordance with the materials of the catalyst and the catalyst-supporting carrier, the intended use, usage conditions and the like of the MEA.

The intra-catalyst layer electrolyte is for performing exchange of protons between the polymer electrolyte membrane and the electrodes. For the intra-catalyst layer electrolyte, the same material as the material constituting the polymer electrolyte membrane is generally used; however, some other materials may be used. An amount of the intra-catalyst layer electrolyte is optimally selected in accordance with the intended use, usage conditions and the like of the MEA.

The diffusion layer is for performing exchange of electrons with the catalyst layer as well as supplying a reactant gas to the catalyst layer. For the diffusion layer, carbon paper, carbon cloth or the like is generally used. Additionally, in order to improve water repellency, carbon paper or the like, a surface of which is coated with a mixture of a powder of a water repellent polymer such as polytetrafluoroethylene and a powder of carbon, may be used as the diffusion layer.

The polymer electrolyte fuel cell consistent with the present invention is characterized in that phosphate containing a predetermined metallic element is fixed to one or more of the polymer electrolyte membrane and the electrodes constituting the MEA.

In the present invention, the metallic element contained in phosphate is at least one element selected from a rare earth element, Ti, Fe, Al and Bi. Incidentally, as is well known, the rare earth element refers to Sc with the atomic number 21, Y with the atomic number 39, and lanthanoid including La with the atomic number 57 to Lu with the atomic number 71. Phosphate containing these metallic elements has an effect of decomposing peroxide as well as stability and elution resistance at comparatively high temperatures and/or low pH.

Among these metallic elements, Ce, Y, Ti, Fe, Al and Bi are comparatively rich in resources and high in price than noble metals, so that the cost for the MEA and the polymer electrolyte fuel cell using the same can be lowered. In addition, phosphate containing the rare earth element, especially phosphate containing Ce is excellent in the effect of decomposing peroxide; therefore, durability of the MEA and the polymer electrolyte fuel cell using the same can be dramatically improved.

In the present invention, phosphate refers to salt of a variety of phosphoric acid including orthophosphoric acid (H₃PO₄), metaphosphoric acid (HPO₃), diphosphoric acid (pyrophosphoric acid, H₄P₂O₇) and triphosphoric acid (H₅P₃O₁₀), which is relatively low in solubility in high-temperature and/or low-pH water. In order to maintain high oxidation resistance for an extended period of time, phosphate having a solubility product constant Kₛₚ(RT) at room temperatures (20-25°C) of at least 10-⁸ or less is preferable. A solubility product constant Kₛₚ(T) at practical working temperatures of the polymer electrolyte fuel cell (80-100°C) is generally one to two-digit orders of magnitude greater than the solubility product constant Kₛₚ(RT) at room temperatures; however, practically enough durability can be achieved if the solubility product constant Kₛₚ(RT) is smaller than or equal to the above-described value. The solubility product constant Kₛₚ(RT) of phosphate at room temperatures is preferably 10⁻¹⁰ or less, more preferably 10⁻²⁰ or less.

Phosphate may contain only one of the above-described metallic elements, or more than one of them. In addition to the above-described metallic elements, phosphate may contain other elements which do not affect the effect of decomposing peroxide and/or the solubility of phosphate (e.g. Ca, Sr). Still further, in phosphate, a part of phosphoric acid ions may be substituted with other anions which do not affect the effect of decomposing peroxide and/or the solubility of salt (e.g. F⁻, OH⁻).

Among these elements, salt (III) of orthophosphoric acid given by the following expression 1 or its hydrate is excellent in the effect of decomposing peroxide and has solvent-resistance; therefore, it is especially suitable for phosphate to be added to the MEA.

(M₁, M₂) (PO₄,F,OH) Expression 1

(In expression 1, M₁ denotes at least one metallic element selected from a rare earth element, Ti, Fe, Al and Be, M₂ denotes an element which do not affect the effect of decomposing peroxide and/or solvent-resistance (e.g. Ca, Sr), and (PO₄,F,OH) indicates that a part of orthophosphoric acid ions (PO₄³⁻) may be substituted with F⁻ or OH⁻.)

In the present invention, phosphate may be fixed to any of the polymer electrolyte membrane, the catalyst layers and the diffusion layers which constitute the MEA. In addition, in a case where phosphate is fixed to the polymer electrolyte membrane, the catalyst layers and/or the diffusion layers, a fixation place thereof is not specifically limited.

For example, in the case of fixing phosphate to the polymer electrolyte membrane, it may be fixed to a surface thereof, or may be uniformly fixed to an inside thereof. Further, in the case of fixing phosphate to the catalyst layer, it may be fixed to a surface of the catalyst or the catalyst-supporting carrier and/or a surface of the intra-catalyst layer electrolyte, or may be fixed to an insideofthecatalyst-supportingcarrierand/oraninside of the inter-catalyst layer electrolyte. Still further, in the case of fixing phosphate to the diffusion layer, it may be uniformly fixed to the whole diffusion layer, or may be fixed to a surface thereof facing the catalyst layer or a surface thereof facing the separator.

In the polymer electrolyte fuel cell, peroxide is generally generated by a side reaction of the electrode reaction, and the generated peroxide diffuses into the respective parts with water inside the fuel cell. Therefore, phosphate is preferably fixed to the vicinity of the electrodes which are sources of peroxide.

Incidentally, in order to maintain electric conductivity of the electrolyte membrane, the polymer electrolyte fuel cell is generally humidified by using an auxiliary equipment. In addition, on the part of the cathode, water is generated by the electrode reaction. In general, the water is directly discharged out of the fuel cell; however, in order to reduce an amount of water to be held in a whole system of the fuel cell, the discharged water is sometimes recycled to humidify the electrolyte membrane. In such a case, since the discharged water sometimes contains peroxide, phosphate may be fixed to a path circulating water such as the surface of the separator, an inner surface of tubes, and an inner surface of a water-holding tank.

An amount of phosphate fixed to the polymer electrolyte membrane, the catalyst layers and/or the diffusion layers is optimally selected in accordance with the usage, required properties and the like of the MEA and the polymer electrolyte fuel cell using the same. In general, as the amount of phosphate fixed is increased, the obtained polymer electrolyte fuel cell becomes more excellent in oxidation resistance and durability.

Next, the effects of the polymer electrolyte fuel cell consistent with the present invention will be described. In the operating environment of the polymer electrolyte fuel cell, peroxide such as hydrogen peroxide is generated as a side reaction of the electrode reaction. It is known that, under the existence of transition metal ions (Mⁿ⁺/M⁽ⁿ⁺¹⁾⁺) such as Fe²⁺/Fe³⁺ ions where the valence changes, such peroxide is decomposed to form radicals by an oxidation reaction of the following expression 2 or a reduction reaction of the following expression 3.

HOOH+M⁽ⁿ⁺¹⁾⁺→HOO · +H⁺+Mⁿ⁺ Expression 2

HOOH+Mⁿ⁺→HO · +OH⁻+M⁽ⁿ⁺¹⁾⁺ Expression 3

The polymer electrolyte fuel cell, in which the electrolyte membrane is generally humidified using auxiliary equipment and transition metal ions derived from the tubes exist in the vicinity of the MEA, is in an environment where peroxide radical is apt to generate. On the other hand, it is known that peroxide radical generated during radical decomposition of peroxide (HOO·, HO·, and the like) breaks the C-H bond of the organic polymer compound and causes degradation and lowering in a molecular weight of the organic polymer compound. Accordingly, if the conventional hydrocarbon-based electrolyte or partially fluorinated electrolyte is directly used in the polymer electrolyte fuel cell, durability cannot be obtained practically enough.

In addition, it has been conventionally considered that the wholly fluorinated electrolyte, in which the C-H bond is not included in the polymer chain, is not deteriorated by peroxide radical. However, the present inventors have found that even the wholly fluorinated electrolyte is deteriorated in the working environment of the fuel cell, F ions are discharged out of the fuel cell due to the deterioration, and peroxide radical is a source material of such deterioration.

In contrast, phosphate containing the predetermined metallic element such as the rare earth element has the effect of suppressing deterioration by peroxide radical. This is because, at a solid-state surface of phosphate containing the rare earth element and the like, peroxide is considered to be ion-decomposed by a reduction reaction of the following expression 4 or an oxidation reaction of the following expression 5 before it is decomposed to form radicals.

H₂O₂+ 2e⁺+2e⁻→2H₂O Expression 4

H₂O₂→O₂+2H⁺+2e⁻ Expression 5

Incidentally, according to the expressions 4 and 5, the reaction at the solid-state surface is finally represented as a so-called catalytic cracking reaction where bimolecular hydrogen peroxides are collided to decompose into water and oxygen as expressed in the following expression 6.

2HOOH→H₂O+O₂ Expression 6

Therefore, by fixing phosphate containing the rare earth element and the like to one or more of the polymer electrolyte membrane, the catalyst layers and the diffusion layers, generation of peroxide radical is suppressed, thereby suppressing deterioration and lowering in a molecular weight of the organic compound by peroxide radical. In addition, even in a case where a hydrocarbon-based electrolyte membrane or a partially fluorinated electrolyte membrane is employed as the polymer electrolyte membrane, a polymer electrolyte fuel cell showing high durability can be obtained. Further, in a case where a wholly fluorinated electrolyte membrane is employed as the polymer electrolyte membrane, deterioration of the wholly fluorinated electrolyte by peroxide radical and elution of F ions caused thereby are suppressed, whereby a polymer electrolyte fuel cell showing higher durability can be obtained.

Incidentally, since phosphate containing the rare earth element and the like is relatively low in solubility in high-temperature and low-pH water, the possibility of elution of phosphate is low even if it is used for an extended period of time in the operating environment of the fuel cell. Therefore, by fixing such phosphate to any parts of the MEA, a polymer electrolyte fuel cell showing high durability for an extended period of time can be obtained. In addition, since phosphate containing the rare earth element and the like is also low in solubility in phosphoric acid, a polymer electrolyte fuel cell showing high durability for an extended period of time can be obtained even if the present invention is applied to a polymer electrolyte fuel cell using phosphoric acid as an electrolyte.

Concretely, in the case of employing the wholly fluorinated electrolyte membrane as the polymer electrolyte membrane, if phosphate containing the predetermined metallic element is fixed thereto, there is obtained a wholly fluorinated electrolyte where the elution velocity of F ions in an immersion test described later is 5 (µg/_{CM}²/hr) or less and the concentration of F ions is not increased even if the immersion test is repeated. In addition, by optimizing the kind and fixation amount of the metallic element, there is obtained a wholly fluorinated electrolyte where the elution velocity of F ions in the immersion test is 1 (µg/cm²/hr) or less and the concentration of F ions is not increased even if the immersion test is repeated.

In addition, among phosphates having the effect of decomposing peroxide and solvent-resistance, that containing Ce, Y, Fe, Ti, Bi or Al is comparatively rich in resources and lower in price than noble metals such as Pt. Therefore, if such phosphate is used, durability of the polymer electrolyte fuel cell can be improved without cost increase. In particular, phosphate containing Ce is relatively low in price and is excellent in the effect of decomposing peroxide; therefore, durability of the polymer electrolyte fuel cell can be dramatically improved without cost increase. In this case, by using phosphate containing Ce derived from so-called misch metal, instead of the rare earth element such as La and Nd, it becomes also possible to produce phosphate containing Ce from a low-cost material without separating respective rare earth elements.

Next, the production method of the polymer electrolyte fuel cell consistent with the present invention will be described. The method of fixing phosphate to the polymer electrolyte membrane, the catalyst layers or the diffusion layers includes the following methods.

The first method is a method of fixing phosphate to the polymer electrolyte membrane, the catalyst layers and/or the diffusion layers using a phosphate powder being a solid body as a starting material. In this case, a particle size of phosphate is preferably not less than 0.05 µm and not more than 5 µm. If the particle size of phosphate is less than 0.05 µm, a specific surface area is increased to promote solubility of phosphate, causing deterioration in long-term stability. On the other hand, if the particle size of phosphate is more than 5 µm, it becomes difficult to uniformly disperse phosphate on a surface or an inside of the polymer electrolyte membrane, the catalyst layers and/or the diffusion layers.

For example, in the case of fixing phosphate uniformly to the inside of the polymer electrolyte membrane, specifically, in preparing the membrane by the casting method from a solution containing a polymer electrolyte which is subjected to melting or is dissolved in a proper solvent, a predetermined amount of phosphate powder may be dispersed in the solution containing the polymer electrolyte. Inaddition, in the case of fixingphosphate to the surface of the polymer electrolyte membrane, specifically, the phosphate powder may be dispersed on the surface thereof or a solution in which the phosphate powder is dispersed may be painted thereon.

Further, for example, in the case of fixing phosphate uniformly to the inside of the catalyst layer, specifically, a phosphate powder is further dispersed in a solution containing a catalyst or a catalyst-supporting carrier and the polymer electrolyte (hereinafter referred to as "catalyst ink"), and the catalyst ink containing the phosphate powder is painted on a surface of the electrolyte membrane, the diffusion layer or a proper base material such as a tetrafluoroethylene sheet by the spray method or the doctor blade method. In addition, in the case of fixing phosphate to the surface of the catalyst layer, specifically, after forming a catalyst layer on the surface of the electrolyte membrane, the diffusion layer or the base material by using catalyst ink not containing the phosphate powder, the phosphate powder is applied to a surface of the catalyst layer or the solution in which the phosphate powder is dispersed is painted thereon.

Still further, for example, in the case of fixing phosphate to the surface of the diffusion layer, the phosphate powder may be applied to the surface of the diffusion layer, or the solution in which the phosphate powder is dispersed may be painted thereon. In addition, in the case of forming a water-repellent layer on the surface of the diffusion layer, a mixture of a water-repellent agent such as polytetrafluoroethylene and carbon, to which the phosphate powder is further added, may be painted on the surface of the diffusion layer.

The second method is a method of bringing the polymer electrolyte membrane or its precursor, the catalyst layer or the diffusion layer, or the polymer electrolyte membrane or its precursor, the diffusion layer or the base material such as a tetrafluoroethylene sheet on which surface the catalyst layer is formed, into contact with one of a first solution containing water-soluble salt or an organic metal complex of the metallic element such as the rare earth element and a second solution containing phosphoric acid, and sequentially into contact with the other one. The second method, which can fix phosphate more uniformly to desired parts, is particularly suitable for the fixing method of phosphate.

It is essential only that the salt used in the second method is water-soluble and its kind is not specifically limited. Specifically mentioned as suitable examples of the water-soluble salt are acetate, oxalate, nitrate, sulfate, chloride and the like of the metallic element such as the rare earth element.

In addition, it is essential only that the organic metal complex is liquid at room temperatures or soluble in a proper solvent. Specifically mentioned as suitable examples of the organic metal complex are tert-butoxide((CH₃)₃CO-), ethyl hexanonate, octanedionate, isopropoxide ((CH₃)₂CHO-) and the like of the metallic element such as the rare earth element.

For example, in the case of fixing phosphate uniformly to the inside of the polymer electrolyte membrane or its precursor (e.g. a sulfonyl fluoride body (hereinafter simply referred to as "F body") of Nafion (a registered trademark)), specifically, the polymer electrolyte membrane or its precursor is first immersed for a predetermined time in the first solution containing the water-soluble salt or the organic metal complex to make absorption of the water-soluble salt or the organic metal complex, or make ion exchange.

Next, the polymer electrolyte membrane or its precursor is immersed in the second solution containing phosphoric acid such as orthophosphoric acid (H₃P0₄), whereby the water-soluble salt or the organic metal complex is hydrolyzed by phosphoric acid to deposit phosphate. In addition, in the case of using the precursor of the polymer electrolyte membrane, the F body is simultaneously protonated by phosphoric acid to be converted to a proton conductor (hereinafter simply referred to as "H body"). Further, the obtained polymer electrolyte membrane is washed with ion-exchanged water to remove excessive phosphoric acid, thereby obtaining a polymer electrolyte membrane with phosphate uniformly fixed to its inside.

As an alternative to the above-described procedure, the polymer electrolyte membrane or its precursor may be first immersed in the second solution to make absorption of phosphoric acid or make ion exchange by phosphoric acid, subsequently immersed in the first solution, and then washed with ion-exchanged water.

In addition, for example, in the case of fixing phosphate to the surface of the polymer electrolyte membrane or its precursor, one of the first solution and the second solution may be first painted on the surface of the polymer electrolyte membrane or its precursor, and the other one is subsequently painted thereon or the polymer electrolyte membrane or its precursor is immersed in the other one, and then ion-exchanged water wash is given thereto.

In addition, for example, in the case of fixing phosphate to the catalyst layer, the polymer electrolyte membrane, the diffusion layer or the base material, on which surface the catalyst layer is formed, may be first immersed in one of the first solution and the second solution, subsequently immersed in the other one, and then washed with ion-exchanged water. Alternatively, one of the first solution and the second solution may be painted on the surface of the catalyst layer which is formed on the surface of the polymer electrolyte membrane, the diffusion layer or the base material, then the other one is painted thereon or the immersion is made in the other one, and then ion-exchanged water wash is given thereto.

In addition, for example, in the case of fixing phosphate uniformly to the inside of the diffusion layer, the diffusion layer may be first immersed in one of the first solution and the second solution, subsequently immersed in the other one, and then washed with ion-exchanged water. Further, in the case of fixing phosphate to the surface of the diffusion layer, one of the first solution and the second solution may be painted on the surface of the diffusion layer, and the other one is painted thereon or the diffusion layer is immersed in the other one, and then ion-exchanged water wash is given thereto.

Incidentally, in either of the methods, if excessive residues, elution and the like of phosphoric acid do not matter, ion-exchanged water wash (the process of removing excessive phosphoric acid) may be omitted. In addition, while the first solution may be used as it is, a complexing agent such as citric acid (C₆H₈O₇) may be added as necessary in order to stabilize the water-soluble salt or the organic metallic complex.

After fixing phosphate to one or more of the polymer electrolyte membrane, the catalyst layers and the diffusion layers with the above-mentioned method, by bonding the catalyst layers, and then bonding the diffusion layers optionally, to the both sides of the polymer electrolyte membrane in accordance with a common procedure, an MEA in which phosphate is fixed to predetermined parts can be obtained. Further, by sandwiching the both sides of the MEA between separators provided with gas passages and stacking a predetermined number of them, the polymer electrolyte fuel cell consistent with the present invention can be obtained.

The polymer electrolyte fuel cell thus obtained, in which phosphate containing the rare earth element and the like are fixed to any part of the MEA, exhibits high durability to peroxide radical. In addition, since phosphate containing the rare earth element and the like is stable to high-temperature and/or low-pH water, it is not eluted and can maintain high durability for an extended time period.

Further, if the second method is employed as the fixing method of phosphate, phosphate can be uniformly fixed to intended parts of the polymer electrolyte membrane, the catalyst layers and/or the diffusion layers. Therefore, an excellent effect of peroxide decomposition can be obtained with a relatively small amount of phosphate, thereby obtaining a polymer electrolyte fuel excellent in durability.

### Example 1

An aqueous solution was prepared by adding cerium nitrate (Ce (NO₃)₃. 6H₂O) to 100 ml of water so that the concentration of Ce ions was 0.05 wt%. A wholly fluorinated electrolyte membrane (a Nafion (a registered trademark) membrane) was immersed in this aqueous solution and heated at 90°C for two hours. Then, the membrane was immersed in 100 ml of a 0.1M H₃PO₄ aqueous solution and hydrolyzed at 90°C for one hour. The membrane gradually changed its color to white, and Ce phosphate was fixed to an inside of the membrane. Then, the membrane was washed with ion-exchanged water a few times, and heated at 90°C for 30 minutes in ion-exchanged water to remove excessive H₃PO₄. The fixation amount of Ce phosphate obtained from the weight change of the membrane was 1.6 wt%.

Next, this membrane was put in 200 ml of an aqueous solution containing 1 wt% of hydrogen peroxide and iron (I) chloride (FeCl₂) corresponding to 14 ppm of Fe, and an immersion test at 100°C for 24 hours was conducted thereon. After the completion of the immersion test, the concentration of F ions dissolved in the aqueous solution was measured using an Orion Ion-Selective Electrode. As a result, the concentration of F ions was 0.80 ppm. In addition, the weight loss of the membrane in the process of the immersion test was -0.3 wt%.

### Example 2

A wholly fluorinated electrolyte membrane to which Gd phosphate was fixed was prepared following the same procedure as Example 1, except for using gadolinium nitrate (Gd(NO₃)₃) as water-soluble salt. The fixation amount of Gd phosphate obtained from the weight change of the membrane was 4.3 wt%. For the obtained membrane, the concentration of F ions and the weight loss were measured under the same conditions as Example 1. As a result, the concentration of F ions was 18.4 ppm and the weight loss was -1.3 wt%.

### Example 3

A wholly fluorinated electrolyte membrane to which La phosphate was fixed was prepared following the same procedure as Example 1, except for using lanthanum nitrate (La(NO₃)₃) as water-soluble salt. The fixation amount of La phosphate obtained from the weight change of the membrane was 3.9 wt%. For the obtained membrane, the concentration of F ions was measured under the same conditions as Example 1. As a result, the concentration of F ions was 5.8 ppm.

### Example 4

A wholly fluorinated electrolyte membrane to which Y phosphate was fixed was prepared following the same procedure as Example 1, except for using yttrium nitrate (Y(NO₃)₃) as water-soluble salt. The fixation amount of Y phosphate obtained from the weight change of the membrane was 6.8wt%. For the obtained membrane, the concentration of F ions was measured under the same conditions as Example 1. As a result, the concentration of F ions was 18.8 ppm.

### Example 5

A wholly fluorinated electrolyte membrane to which Fe phosphate was fixed was prepared following the same procedure as Example 1, except for using iron (I) chloride (FeCl₂) as water-soluble salt. The fixation amount of Fe phosphate obtained from the weight change of the membrane was 1.3 wt%. For the obtained membrane, the concentration of F ions was measured under the same conditions as Example 1. As a result, the concentration of F ions was 8.6 ppm.

### Example 6

A wholly fluorinated electrolyte membrane to which Ti phosphate was fixed was prepared following the same procedure as Example 1, except for dissolving titanium sulfate (Ti₂(SO₄)₃) in 100 ml of water so that the concentration of Ti ions was 30 wt%. The fixation amount of Ti phosphate obtained from the weight change of the membrane was 0.3 wt%. For the obtained membrane, the concentration of F ions and the weight loss were measured under the same conditions as Example 1. As a result, the concentration of F ions was 15.0 ppm and the weight loss was -1.3 wt%.

### Example 7

A wholly fluorinated electrolyte membrane to which Al phosphate was fixed was prepared following the same procedure as Example 1, except for using aluminium nitrate (Al(NO₃)₃) as water-soluble salt. The fixation amount of Al phosphate obtained from the weight change of the membrane was 0.4 wt%. For the obtained membrane, the concentration of F ions and the weight loss were measured under the same conditions as Example 1. As a result, the concentration of F ions was 17.4 ppm and the weight loss was -2.8 wt%.

### Comparative Example 1

The wholly fluorinated electrolyte membrane used in Example 1 was used as it is (without treatment), and the concentration of F ions and the weight loss thereof were measured under the same conditions as Example 1. As a result, the concentration of F ions was 45.3 ppm and the weight loss was -6.7 wt%.

### Comparative Example 2

A wholly fluorinated electrolyte membrane to which Ce sulfate was fixed was prepared following the same procedure as Example 1, except for using a 0.1M H₂SO₄ aqueous solution instead of the 0.1M H₃PO₄ aqueous solution. The fixation amount of Ce sulfate obtained from the weight change of the membrane was 0.2 wt%. For the obtained membrane, the concentration of F ions and the weight loss were measured under the same conditions as Example 1. As a result, the concentration of F ions was 35.2 ppm and the weight loss was -3.8 wt%. It is considered that the concentration of F ions of the wholly fluorinated electrolyte membrane to which Ce sulfate was fixed is higher than Example 1 since Ce sulfate was eluted during the immersion test because of relatively high solubility of Ce sulfate.

Table 1 shows the results obtained in Examples 1 to 7 and Comparative Examples 1 and 2.

**Table 1**

| | Salt fixed in membrane | Concentration of F ions (ppm) | Weight loss (wt%) |
|---|---|---|---|
| Example 1 | Ce phosphate | 0.80 | -0.3 |
| Example 2 | Gd phosphate | 18.4 | -1.3 |
| Example 3 | La phosphate | 5.8 | - |
| Example 4 | Y phosphate | 18.8 | - |
| Example 5 | Fe phosphate | 8.6 | - |
| Example 6 | Ti phosphate | 15.0 | -1.3 |
| Example 7 | Al phosphate | 17.4 | -2.8 |
| Comparative Example 1 | - | 45.3 | -6.7 |
| Comparative Example 2 | Ce sulfate | 35.2 | -3.8 |

### Example 8

A wholly fluorinated electrolyte membrane to which Ce phosphate was fixed was prepared following the same procedure as Example 1. Then, the immersion test under the same conditions as Example 1 was repeated twice, and the concentration of F ions was measured for the first and the second immersion tests. Further, based on the measured concentration of F ions, the elution velocity of F ions was calculated. As a result, the second elution velocity of F ions was 0.04 (µg/cm²/hr) while the first elution velocity of F ions was 0.13 (µg/cm²/hr), and it was shown that the effect of suppressing elution of F ions could be maintained even if the immersion test was repeated twice.

In addition, the weight loss of the membrane after the second immersion test with respect to an initiation state (i.e., a state before the first immersion test) was -0.3 wt% while the weight loss of the membrane after the first immersion test was -0.3 wt%, and the weight loss was hardly generated during the second immersion test.

### Example 9

A wholly fluorinated electrolyte membrane to which La phosphate was fixed was prepared following the same procedure as Example 3. Then, the immersion test was repeated twice under the same conditions as Example 1, and the elution velocity of F ions was calculated for the first and the second immersion tests. As a result, the second elution velocity of F ions was 0.72 (*µ* g/cm²/hr) while the first elution velocity of F ions was 0.94 (*µ* g/cm²/hr), and it was shown that the effect of suppressing elution of F ions could be maintained even if the immersion test was repeated twice.

### Example 10

A wholly fluorinated electrolyte membrane to which Bi phosphate was fixed was prepared following the same procedure as Example 1, except for using bismuth nitrate (Bi(NO₃)₃) as water-soluble salt. The fixation amount of Bi phosphate obtained from the weight change of the membrane was 18 wt%. Then, the immersion test was repeated twice under the same conditions as Example 1, and the elution velocity of F ions was calculated for the first and the second immersion tests. As a result, the second elution velocity of F ions was 2.25 (µg/cm²/hr) while the first elution velocity of F ions was 3.20 (µg/cm²/hr), and the elution velocity of F ions was decreased as compared to the first one.

### Comparative Example 3

A wholly fluorinated electrolyte membrane to which Zr phosphate was fixed was prepared following the same procedure as Example 1, except for using zirconium oxynitrate (ZrO(NO₃)₂·2H₂O) as water-soluble salt. The fixation amount of phosphate obtained from the weight change of the membrane was 1.5 wt%. Then, the immersion test was repeated twice under the same conditions as Example 1, and the elution velocity of F ions was calculated for the first and the second immersion tests . As a result, the second elution velocity of F ions was 4. 93 (µg/cm²/hr) while the first elution velocity of F ions was 1.19 (µ g/cm²/hr), and the elution velocity of F ions was increased by repeating the immersion test twice.

In addition, the weight loss of the membrane after the second immersion test with respect to the initiation state was -3. 0 wt% while the weight loss of the membrane after the first immersion test was -1.1 wt%, and the weight loss was increased during the second immersion test. It is considered that such weight loss was produced by zirconium phosphate eluting from the membrane because of relatively high solubility of zirconium phosphate.

### Comparative Example 4

The wholly fluorinated electrolyte membrane used in Example 1 was used as it is (without treatment), and the immersion test was repeated twice under the same conditions as Example 1, and the elution velocity of F ions was measured for the first and the second immersion tests. As a result, the second elution velocity of F ions was 6. 32 (µg/cm²/hr) while the first elution velocity of F ions was 7.18 (µg/cm²/hr), and it was shown that a large amount of F ions were eluted during both the immersion tests. In addition, the weight loss of the membrane after the second immersion test with respect to the initial state was -10.6 wt% while the weight loss of the membrane after the first immersion test was -6.7 wt%, and the weight loss was increased during the second immersion test.

Table 2 shows the results obtained in Examples 8 to 10 and Comparative Examples 3 and 4. In Table 2, one in which the second elution velocity of F ions was not increased was judged to be "satisfactory", and one in which the elution velocity of F ions was increased or the elution velocity of F ions was above 5 (µg/cm²/hr) was judged to be "unsatisfactory".

**Table 2**

| | Salt fixed in membrane | Elution velocity of F ions of F ions (µg/cm²/hr) | | Weight loss (wt%) | | Judge |
|---|---|---|---|---|---|---|
| | | First | Second | First | Second | |
| Example 8 | Ce phosphate | 0.13 | 0.04 | | -0.3 | Satisfactory |
| Example 9 | La phosphate | 0.94 | 0.72 | -0.3 | - | Satisfactory |
| Example 10 | Bi phosphate | 3.20 | 2.25 | - | - | Satisfactory |
| Comparative Example 3 | Zr phosphate | 1.19 | 4.93 | -1.1 | -3.0 | Unsatisfactory |
| Comparative Example 4 | - | 7.18 | 6.32 | -6.7 | -10.6 | Unsatisfactory |

### Example 11

To 0.5 g of a 60wt%Pt/C catalyst, 0.5 wt% equivalent of a cerium phosphate (CePO₄) powder (mean particle size: 2 µm, purity: 99.9%, manufactured by Kojundo Chemical Laboratory Co., Ltd.) in a catalyst weight ratio, 2.0 g of diluted water, 2.5 g of ethanol, 1.0 g of propylene glycol, 0.9 g of a 22wt% Nafion (a registered trademark) solution (manufactured by E. I. Du Pont de Nemours and Company) were added in this order and dispersed using an ultrasonic homogenizer to prepare catalyst ink. This catalyst ink was painted on a tetrafluoroethylene sheet and dried to obtain a cathode electrode. An amount of Pt used was made constant in the range of 0.5 to 0.6 mg/cm². This electrode was cut into pieces of 36 mm per side and subjected to thermal compression (120°C, 50 kgf/cm² (4.9 MPa)) onto one side of a wholly fluorinated electrolyte membrane (a Nafion (a registered trademark) membrane) to prepare an MEA.

### Example 12

100 ml of a 0.1M H₃PO₄ aqueous solution was added to 100 ml of a 0.05M Ce (NO₃)₃ · 6H₂O aqueous solution to react with each other at 90°C for one hour so that precipitate was generated. The obtained precipitate was fully washed with water and dried at 80°C to be made into a white powder, of which mean particle size was 0.1 µm. Fig. 1 shows an X-ray diffraction profile of the white powder. Main peaks correspond to a JCPDS card No. 34-1380 (CePO₄), so that it was shown that the white powder was cerium phosphate (CePO₄). In addition, by using the obtained white powder, an MEA was prepared following the same procedure as Example 11.

### Comparative Example 5

An MEA was prepared following the same procedure as Example 11, except for using the wholly fluorinated electrolyte membrane used in Example 1 as it is (without treatment).

A durability test was conducted on the MEAs obtained in Examples 11 and 12 and Comparative Example 5. The durability test was conducted under the conditions of an anode gas: H₂ (100 ml/min), a cathode gas: air (100 ml/min), cell temperature: 90°C, humidifier temperature: 90°C (both the anode and the cathode sides), and performed as an open circuit durability test for 24 hours. In addition, the concentration of F ions eluted in water which was collected from the cathode side was measured by an ion chromatography system PIA-1000 manufactured by Shimadzu Corporation to calculate the elution velocity of F ions per unit time and per unit area. Table 3 shows results thereof.

**Table 3**

| | Salt fixed in membrane | Elution velocity of F ions (*µ* g/cm²/hr) |
|---|---|---|
| Example 11 | CePO₄ | 0.03 |
| Example 12 | CePO₄ | 0.02 |
| Comparative Example 5 | - | 4.01 |

In the case of the MEA of Comparative Example 5 using the electrolyte membrane without treatment, the elution velocity of F ions was 4.01 (µg/cm²/hr). In contrast, in the case of the MEA of Example 11 using the commercially available cerium phosphate powder and the MEA of Example 12 using the electrolyte membrane containing the synthesized cerium phosphate powder, the elution velocity of F ions was 0.03 (µg/cm²/hr) and 0.02 (µg/cm²/hr), respectively, and it was shown that elution of F ions was extensively suppressed as compared to Comparative Example 5.

The foregoing description of the preferred embodiments of the invention is not exhaustive or to limit the invention to the precise form disclosed, and modifications and variations are possible in the light of the above teachings.

### INDUSTRIAL APPLICABILITY

The polymer electrolyte fuel cell consistent with the present invention may be applied to an onboard power source, a fixed type compact generator, a co-generation system, and the like. In addition, the application of the polymer electrolyte to which phosphate containing the predetermined metallic element is fixed is not limited to the electrolyte membrane or the intra-catalyst electrolyte of the polymer electrolyte fuel cell, but may be employed as an electrolyte membrane, an electrode material and the like used in various kinds of electrochemical devices such as a water electrolyzer, a halogen hydracid electrolyzer, a sodium chloride electrolyzer, an oxygen and/or hydrogen concentrator, a humidity sensor and a gas sensor.

## Claims

1. A polymer electrolyte fuel cell comprising a membrane-electrode assembly including:
a polymer electrolyte membrane; and
electrodes bonded to both sides of the polymer electrolyte membrane,
wherein phosphate containing at least one metallic element selected from the group consisting of a rare earth element, Ti, Fe, Al and Bi is fixed to at least one of the polymer electrolyte membrane and the electrodes.

2. The polymer electrolyte fuel cell according to claim 1, wherein the metallic element is Ce.

3. The polymer electrolyte fuel cell according to claim 2, wherein the polymer electrolyte membrane is obtained by bringing one of the solid electrolyte membrane and a precursor thereof into contact with one of a first solution containing one of water-soluble salt of the metallic element and an organic metallic complex of the metallic element and a second solution containing phosphoric acid, and subsequently into contact with the other one of the first and the second solutions.

4. The polymer electrolyte fuel cell according to claim 3, wherein the solid electrolyte membrane is a wholly fluorinated electrolyte membrane.

5. The polymer electrolyte fuel cell according to claim 2, wherein the solid electrolyte membrane is a wholly fluorinated electrolyte membrane.

6. The polymer electrolyte fuel cell according to claim 1, wherein the polymer electrolyte membrane is obtained by bringing one of the solid electrolyte membrane and a precursor thereof into contact with one of a first solution containing one of water-soluble salt of the metallic element and an organic metallic complex of the metallic element and a second solution containing phosphoric acid, and subsequently into contact with the other one of the first and the second solutions.

7. The polymer electrolyte fuel cell according to claim 6, wherein the solid electrolyte membrane is a wholly fluorinated electrolyte membrane.

8. The polymer electrolyte fuel cell according to claim 1, wherein the solid electrolyte membrane is a wholly fluorinated electrolyte membrane.
